# EUROPEAN PATENT SPECIFICATION

(11) **EP 2 738 419 B1**
(45) Date of publication and mention of the grant of the patent: **08.06.2016**
(21) Application number: 12195219.6
(22) Date of filing: 03.12.2012
(51) Int. Cl.: F16G 5/16

(54) **Drive belt for a pulley-type continuously variable transmission with transverse members provided with multiple pulley contact surfaces**
Antriebsriemen für stufenlosen Riemenantrieb mit transversalen Elementen mit mehreren Riemenkontaktoberflächen
Courroie d'entraînement pour transmission à variation continue de type poulie avec des éléments transversaux pourvus de plusieurs surfaces de contact de poulie

(43) Date of publication of application: 04.06.2014
(73) Proprietor: ROBERT BOSCH GMBH, 70442 Stuttgart (DE)
(72) Inventor: Van der Meer, Cornelis Johannes Maria, 5032 XG Tilburg (NL)
(74) Representative: Plevier, Gabriel Anton Johan Maria

(56) References cited:
- EP-A1- 0 073 962
- DE-A1- 2 414 989
- JP-A- S 579 345

## Description

The present invention relates to a drive belt for a continuously variable transmission having two pulleys, each having two, at least partially, conical pulley sheaves for wedging-in the drive belt. The known drive belt comprises an endless carrier that is composed of a set of nested, flexible metal rings and a number of transverse members that together form an essentially continuous row along the circumference of the endless carrier. Each transverse member defines a cut-out or recess that opens towards an axial or lateral side of the drive belt and that extends in a direction generally towards the opposite axial side of the drive belt to beyond the (axial) middle of the transverse member, in which recess the endless carrier is located. Such a drive belt with effectively C-shaped transverse members is known from, for example, the European patent publication No. EP-0014013-A, in particular figure 1 thereof.

The known transverse member includes a bottom part lying below i.e. radially inward from the recess, a top part lying above, i.e. radially outside the recess, and a middle part lying on the axially closed side of the recess and connecting the said bottom and top parts.
In the bottom part of the transverse member, on a front main surface thereof, a so-called tilting edge is provided. The tilting edge forms an axially extending transition between a radially outer section of the transverse member and a tapered radially inner section thereof. Such tilting edge and tapered inner section of the transverse member allow adjoining transverse members to mutually tilt in a curved trajectory part of the drive belt in the transmission.

Further on the said front main surface, in the top part of the transverse member, a projection is provided. In the drive belt the projection is inserted in a hole provided in an opposite, i.e. rear main surface of an adjacent transverse member in the drive belt. Such projection and hole serve to align the row of transverse members of the drive belt in a plane that is oriented perpendicular to the circumference direction of the drive belt.

In the bottom part of the transverse member on either axial side thereof, the transverse member is provided with a contact surface for frictionally engaging the pulley sheaves. Typically, the pulley contact surfaces either are corrugated or are provided with a substantial surface roughness, such that only the peaks of the corrugation or roughness profile of these contact surfaces arrive in actual contact with the pulley sheaves. This latter feature provides that cooling oil that is applied in the known transmission can be accommodated in the valleys of the said corrugation or roughness profile, thus improving the friction between the drive belt and the transmission pulleys.

During operation in the transmission, the transverse members of the drive belt are driven in the direction of rotation of a driving pulley of the transmission by friction forces being exerted by the pulley sheaves of the driving pulley on the pulley contact surfaces of the transverse members. As a result, the transverse members push each other forward along the circumference of the endless carrier of the drive belt and, thereby, rotationally drive the driven pulley by means of friction forces exerted by the pulley contact surfaces of the transverse members on the pulley sheaves of the driven pulley.

The balance of forces that act on the transverse members during such operation, can cause these to rotate about the axial and/or the radial direction relative to the endless carrier. Such relative rotation is, however, limited by the interaction between the projection and the hole of each pair of adjacent transverse members in the drive belt. Otherwise, i.e. if such relative rotation would not be limited, the friction between the drive belt and the pulleys would unfavourably reduce and/or the drive belt could even be damaged.

The known projection and hole have the disadvantage that these contribute, to a substantial extent, to the overall complexity and cost of the manufacturing process of the transverse members. Especially when the size of the projection and hole becomes larger to reliably cope with the forces resulting from the said interaction there between, the manufacturing of the transverse members becomes increasingly more difficult. It is, therefore, to be preferred in principle that a tendency of the transverse members to rotate relative to the endless carrier, in the manner described hereinabove, is as small as possible.

One measure for reducing the said tendency of the transverse member to rotate during operation is known from the European patent publication No. 0562654-A, albeit with reference to an effectively I-shaped transverse member, i.e. a transverse member that is provided with two smaller recesses, each recess opening towards a respective axial side of the transverse member. EP-0562654-A teaches to design the transverse member such that a radially inwardly directed force of interaction between such member and the endless carrier results more towards the front main surface than towards the rear main surface of such member.

DE 24 14 989 A1 discloses a transverse member whereof both pulley contact surfaces are not only located in the bottom part, but also in the top part thereof. Furthermore, DE 24 14 989 A1 teaches to provide the pulley contact surface that is located on the side of the transverse member opposite the side thereof including the opening of the recess, in two separate sections that are separated at the middle part of the transverse member, such that one such separate section thereof is located in the bottom part of the transverse member and the other one separate section thereof is located in the top part thereof.

It is also an object of the present invention to reduce the said tendency of the transverse member to rotate relative to the endless carrier, however, specifically in relation to the generally C-shaped transverse member.

According to the invention this object is realised in the design of the transverse member according to claim 1 hereinafter. In this first embodiment of the invention, the pulley contact surface located on the axial side of the transverse member opposite the axial side thereof including the opening of the recess, is provided with a further, i.e. third, separate section that is located in the top part of the transverse member, radially outward from the aforementioned two separate sections of the respective pulley contact surface. The said third separate section of the pulley contact surface in accordance with the invention is can be included for preventing that the top part of the transverse member deforms, i.e. bends towards the radial outside, due to, in particular, the rotation movement of the transverse member between the pulley sheaves. Otherwise it might occur, in particular at a high (circulation) speed of the drive belt in the transmission and at a small running radius between the pulley sheaves, that the section of the pulley contact surface in the top part of the transverse member on the axial side thereof that includes the opening of the recess, effectively looses (frictional) contact with a respective pulley sheave. Such loss of contact would (re-)introduce an imbalance between the (friction) forces exerted on or by the left and right axial sides of the transverse member, which provides the transverse member with the said tendency to rotate relative to the endless carrier in the first place.

Preferably, the said third separate section of the pulley contact surface is intersected by, or at least is located in the close vicinity of an imaginary straight line drawn through the radially outer end of the opposite pulley contact surface and oriented essentially perpendicular to such opposite pulley contact surface. More in particular, the said third separate section is located radially inward of such imaginary line SL. In this specific design of the transverse member according to the invention, the intended function of the said third separate section is realised in an effective manner.

It is noted that such intended function may in fact be realised in the first embodiment of the invention as well, by extending the respective pulley contact surface in radial outward direction to such an extent that an imaginary straight line connecting the radially outer limit of such respective pulley contact surface and the radially outer limit of the opposite pulley contact surface or surface sections is oriented essentially perpendicular to such opposite pulley contact surface.

The invention will now be explained by way of example on the basis of the description below with reference to the drawing, in which:
figure 1 is a perspective view of an example not part of the invention of a partially cut-away transmission with pulleys and a drive belt;
figure 2 is a front view of an example not part of the invention of a generally C-shaped transverse member of the drive belt, showing the overall front contour thereof;
figure 3 is a side elevation of the transverse member of figure 2;
figure 4 shows the transverse member of figures 2 and 3 incorporated in the drive belt in the transmission in a schematic cross-section thereof;
figure 5 shows a schematic front view of an example not part of the invention of a generally C-shaped transverse member;
figure 6 provides a schematic front view of an example not part of the invention of a generally C-shaped transverse member and
figure 7 provides a schematic front view of a generally C-shaped transverse member in accordance with an embodiment of the invention.

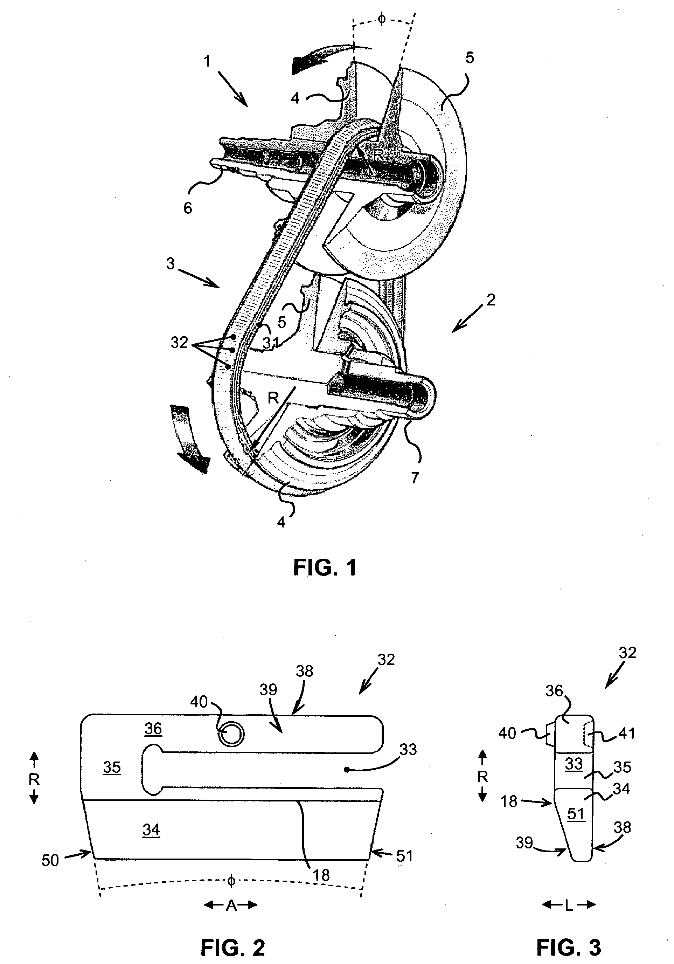

Figure 1 schematically shows the central parts of a continuously variable transmission for use in a driveline of, for example, passenger motor vehicles. This transmission is well-known per se and comprises at least a first variable pulley 1 and a second variable pulley 2 that each comprise a fixed, effectively conical pulley sheave 5 and a moveable, effectively pulley sheave 4, which latter conical sheave 4 is axially displaceable, but rotationally fixed to a respective shaft 5, 6 of the respective pulley 1, 2. A drive belt 3 of the transmission is wrapped around the pulleys 1, 2, while being accommodated between the conical sheaves 4, 5 thereof.

During operation of the transmission, the drive belt 3 is clamped between the said pulley sheaves 4, 5 at each pulley 1, 2 and thus provides a rotational connection there between. To this end, electronically controllable and hydraulically acting movement means that act on the respective moveable pulley sheaves 4 are accommodated in the transmission (not shown). In addition to the clamping-in of the drive belt, these movement means also control the respective radial positions R of the drive belt 3 at the pulleys 1, 2 and, hence, the speed and torque ratio provided by the transmission.

The known drive belt 3 is composed of an endless carrier 31 and a plurality of transverse members 32 that are mounted on the endless carrier 31 along the circumference thereof in an essentially contiguous row. In the drive belt 3 the transverse members 32 are movable along the entire circumference of the endless carrier 31, which endless carrier 31 is typically composed of a number of thin and flat metal rings (i.e. bands) that are mutually nested.

Figure 2 provides a close-up of a transverse member 32, looking in the circumferential direction "L" of the drive belt 3, and figure 3 provides a side view of the same transverse member 32, looking from the right to the left of figure 2, i.e. in the axial direction "A" of the drive belt 3.

The known transverse member 32 is generally shaped similar to the capital "C", i.e. is generally C-shaped. The known transverse member 32 defines a recess 33 that is open towards one axial side of the transverse member 32. The known transverse member 32 thus includes three main parts 34, 35, 36, whereof a first or bottom part 34 lies below or inward from the recess 33 in the radial direction "R", whereof a second or middle part 35 lies axially in line with the recess 33 and whereof a third or top part 36 lies radially outward from the recess 33. In the drive belt 3, the endless carrier 31 is located in the said recess 33.

On either axial end thereof, the bottom part 34 is provided with a pulley contact surface 50, 51 for producing the frictional contact with the pulley sheaves 4, 5. These pulley contact surfaces 50, 51 of the transverse member 32 are mutually oriented at an angle φ that corresponds to an angle φ defined between the conical sheaves 4, 5 of the pulleys 1, 2 (see figure 1).

On a front main face 39 of the transverse member 32, in the bottom part 34 thereof, a so-called tilting edge 18 is provided that forms a transition between a radially outer or head section and a tapering radially inner or bottom section of the transverse member 32. Such tilting edge 18 and tapering bottom section allow the transverse members 32 in the drive belt 3 to mutually tilt in a curved trajectory part of the drive belt 3 in the transmission.

Further on the front main face 39 of the transverse member 32, however in the top part 36 thereof, a projection 40 is provided. In the drive belt 3 the projection 40 is inserted in a hole 41 provided in the opposite, i.e. rear main face 38 of an adjacent transverse member 32. Such projection 40 and hole 41 serve to mutually align the adjacent transverse members 32 in the said row of transverse members 32.

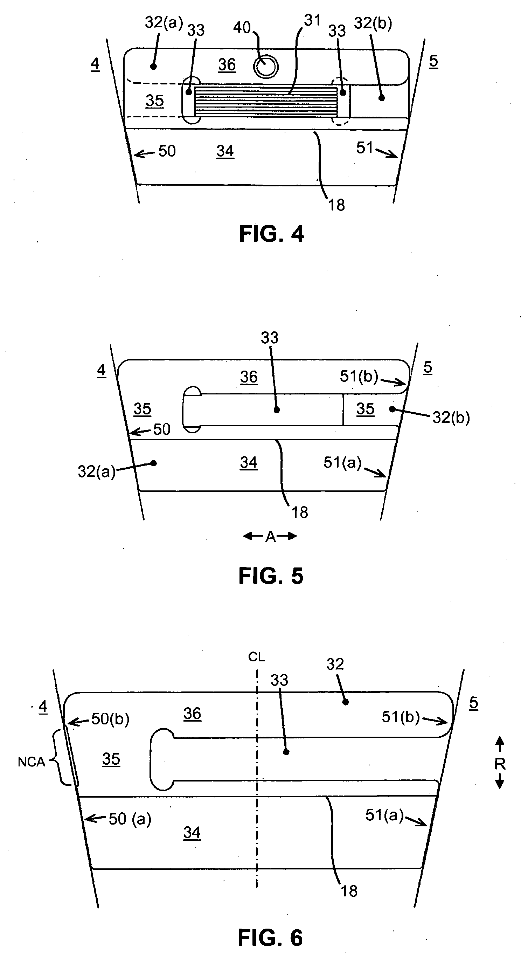

In figure 4, a cross-section of the known drive belt 3, as applied in the transmission, is shown. The drive belt 3 is shown to be wedged between the (marginally indicated) pulley sheaves 4, 5, with the pulley contact surfaces 50, 51 of the transverse member 32 (frictionally) engaging these sheaves 4, 5. It is further shown in figure 4 that adjacent, i.e. consecutive transverse members 32(a), 32(b) are included in the drive belt 3 in a mutually axially mirrored orientation. In other words, the recesses 33 of two consecutive transverse members 32(a), 32(b) of the drive belt 3 open in respective, mutually opposite axial directions. In figure 4, the contour of the back lying transverse member 32(b) is indicated by dashed lines where it lies behind the front lying transverse member 32 (a). As a result of the thus shown arrangement of the transverse members 32, 32(a), 32(b), the endless carrier 31 is located in the drive belt 3 axially centred and, moreover, is completely confined in the plane of figure 4. Finally, in figure 4 the typical construction of the endless carrier 31 is shown, which carrier 31 includes a number of radially nested, flat and thin rings or bands.

Figure 5 illustrates by way of an example not part of the invention a schematic front view of a transverse member 32 similar to figure 4. Both pulley contact surfaces 50, 51 of the transverse member 32 are located not only the bottom part 34 thereof, but also in the top part 36 of the transverse member 32.

In the design of the transverse member 32 according to figure 5, the pulley contact surface 50 on the left (axial) side of the front lying transverse member 32(a), i.e. the axial side that includes the middle part 35, extends over (almost) the full radial height thereof, thus covering all of the bottom, middle and top parts 34, 35 and 36 thereof. On the right (axial) side of that transverse member 32, i.e. that includes the opening of the recess 33, the pulley contact surface 51 is provided in two, mutually separated sections 51(a) and 51(b), whereof a first section 51(a) is located in the bottom part 34 of the front lying transverse member 32 (a) and whereof a second section 51(b) is located in the top part 36 thereof.

Further in the design of the transverse member 32, more in particular of the pulley contact surfaces 50, 51; 51(a), 51(b) thereof, according to figure 5, the transverse member 32 engages the pulley sheaves 4, 5 both below (i.e. radially inward from) and above (i.e. radially outward from) the recess 33, i.e. the endless carrier 31 of the drive belt 3. As a result, a tendency of the transverse member 32 to rotate about the axial direction A during operation of the drive belt 3, is favourably reduced, at least relative to the known transverse member design according to figure 4. Such improved stability of the transverse members 32 during operation of the drive belt 3, may in certain special applications of low speed and low torque even render the projection 40 and hole 41 obsolete, as is illustrated in figure 5. However, this will not be the case as a rule.

Figure 6 illustrates by way of an example not part of the invention a schematic front view of a transverse member 32. The pulley contact surfaces 50, 51 on both (left and right) axial sides of the transverse member 32 are provided in two separate sections 50(a), 50 (b), 51(a), 51 (b), which sections 50(a), 50(b); 51(a), 51(b) of each pulley contact surface 50; 51 are mutually separated at and preferably over the extent of the middle part 35 of the transverse member 32. At this middle part 35 the transverse member 32 according to this example will thus not arrive in (frictional) contact with the pulley sheaves 4, 5, neither at the (right) axial side thereof that includes the recess 33, nor at the (left) axial side of the said middle part 35 of the transverse member 32, where to this respective (left) axial side is provided with a first non-contact part NCS1 that is recessed or indented relative to the said first and second sections 50(a) and 50(b) of the respective (i.e. left side) pulley contact surface 50.

In the design of the transverse member 32 according to figure 6, the respective pulley contact surfaces 50, 51; 50(a), 50(b), 51(a), 51(b) thereof are effectively each other's mirror image relative to a imaginary centre line CL of the transverse member 32. As a result, the friction forces exerted on or by the respective (left and right) axial sides of the transverse member 32 during operation will be largely balanced and a tendency of the transverse member 32 to rotate about the radial direction R during operation of the drive belt 3 is favourably reduced, at least relative to the known transverse member design according to figure 4. Such improved stability of the transverse members 32 during operation of the drive belt 3, may in certain special applications of low speed and low torque even render the projection 40 and hole 41 obsolete, as is illustrated in figure 6. However, this will not be the case as a rule.

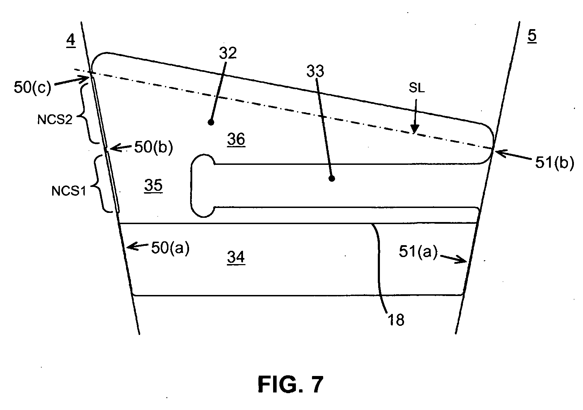

In figure 7 an embodiment of the present invention is illustrated by way of a schematic front view of the novel transverse member 32. In this embodiment of the invention, the pulley contact surface 50 located on the (left) axial side of the transverse member 32 that includes the middle part 35 thereof extends in radially outward direction to beyond the opposite pulley contact surface 51, i.e. the pulley contact surface 51 located on the (right) axial side of the transverse member 32 including the opening of the recess 33.

In the design of the transverse member 32 according to figure 7, it is prevented that the top part 36 of the transverse member 32 can bend in radial outward direction or can rotate relative to the middle part 35 thereof. In particular when the transverse element 32 is subjected to a comparatively high centrifugal force, it might otherwise occur that the top part 36 of the transverse element 32, at least effectively and disadvantageously, looses (frictional) contact with a respective pulley sheave 5 at the (right) axial side of the transverse member 32 including the opening of the recess 33.

Preferably, as is illustrated in figure 7, the pulley contact surface 50 located on the (left) axial side of the transverse member 32 including the middle part 35 thereof is provided in three separate sections 50(a), 50(b), 50(c), with the third section 50(c) provided in addition to and radially outward from the two separate sections 50 (a), 50 (b). Hereto, the respective (left) axial side of the transverse member 32 is provided with a second non-contact part NCS2 that is recessed or indented relative to the said second and third sections 50(b) and 50(c) of the respective (i.e. left-side) pulley contact surface 50. This third, separate section 50(c) will leave the By this specific design of the respective (i.e. left-side) pulley contact surface 50; 50(a), 50(b), 50(c), the said balance between the friction forces exerted on or by the respective (left and right) axial sides of the transverse member 32 during operation will be largely unaffected.

More preferably, as is also illustrated in figure 7, the said third separate section 50 (c) of the pulley contact surface 50; 50(a), 50(b), 50(c) is located just about on the radially inside of an imaginary straight line SL drawn through the radially outer one of the two separate sections 50(a), 50(b) of the opposite pulley contact surface 50; 50(a), 50(b) and oriented essentially perpendicular to such opposite pulley contact surface 50; 50(a), 50(b).

In summary, the pulley contact surfaces 50, 51 that are provided on either axial side of the transverse member 32 for establishing the friction contact with the pulleys 1, 2 of a continuously variable transmission, extend from bottom part 34 of the transverse member 32 into the top part 36 thereof, whether interrupted by a recessed part 33, NCS1, NCS2 of the transverse member 32 or not.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible that to apply any combination of two or more of such features therein.

The invention represented by the present disclosure is not limited to the embodiments and/or the examples that are explicitly mentioned herein, but also encompasses amendments, modifications and practical applications thereof, in particular those that lie within reach of the person skilled in the relevant art.

## Claims

1. Transverse member (32) for a drive belt (3) for use in a continuously variable transmission such as for passenger motor vehicles with two pulleys (1, 2) where between the drive belt (3) is accommodated, which transverse member (32) defines a recess (33) that is open in the direction of a lateral side of the drive belt(3), which transverse member (32) includes a bottom part (34) located radially inward of the recess (33), a connecting part (35) located on the opposite, i.e. closed side of the recess (33) and a top part (36) located radially outward of the recess (33), whereof the bottom part (34), on either side thereof, respectively corresponding to a lateral side of the drive belt(3), is provided with a pulley contact surface (50; 51) for effecting a frictional contact with the pulleys (1, 2), which pulley contact surfaces (50, 51) extend into the top part (36) of the transverse member (32), **characterised in that** the pulley contact surface (50) on a lateral side of the transverse member (32) that includes the connecting part (35) thereof, extends radially outward beyond the opposite pulley contact surface (51) provided on the opposite lateral side of the transverse member (32) that includes the opening of the recess (33).

2. The transverse member (32) according to claim 1, **characterised in that** the pulley contact surfaces (50, 51) thereof are both provided in two separate sections, which sections are mutually separated either by the recess (33) or by the connecting part (35) of the transverse member (32) and between which separate sections of the pulley contact surfaces (50, 51) the transverse member (32) does not arrive in frictional contact with the pulleys (1, 2).

3. The transverse member (32) according to claim 1 or 2, **characterised in that** the pulley contact surface (50) provided on the side of the connecting part (35) of the transverse member (32), extends radially outward beyond the opposite pulley contact surface (51) provided on the side of the transverse member (32) that includes the opening of the recess (33), but does not extend radially outward beyond an imaginary straight line (SL) drawn through the radially outer end (51(b)) of the said opposite pulley contact surface (51) and oriented essentially perpendicular to such opposite pulley contact surface (51).

4. The transverse member (32) according to claim 1, 2 or 3, **characterised in that** the pulley contact surface (50) provided on the side of the connecting part (35) of the transverse member (32) is provided in three separate sections (50(a), 50(b), 50(c)) that are mutually separated by two recessed or indented parts (NCS1, NCS2) of the transverse member (32), which indented parts (NCS1, NCS2) are indented relative to an imaginary line connecting the said three separate sections (50(a), 50(b), 50(c))) and which indented parts (NCS1, NCS2) do not arrive in frictional contact with the pulleys (1, 2).

5. Drive belt (3) with an endless carrier (31) and with a plurality of transverse members (32) according to one of the preceding claims, wherein the endless carrier (31) is accommodated in the recesses (33) of the transverse members (32), such that the bottom part (34) of the transverse members (32) is located on the radial inside of the endless carrier (31) and that together the transverse members (32) form an essentially continuous row along the circumference of the endless carrier (31).

6. Drive belt (3) according to claim 5, wherein the transverse members (32), in particular consecutive transverse members (32), are included in the drive belt (3) in a mutually mirrored orientation.

7. Continuously variable transmission with the drive belt (3) according to claim 5 or 6 and with two pulleys (1, 2) that are each provided with two, at least partially, conical pulley sheaves (4, 5) for wedging-in the drive belt (3) at least during operation of the transmission.

## Patentansprüche

1. Transversales Element (32) für einen Antriebsriemen (3) zur Verwendung in einem stufenlosen Getriebe wie für Personenkraftwagen mit zwei Riemenscheiben (1, 2), zwischen denen der Antriebsriemen (3) aufgenommen ist, wobei das transversale Element (32) eine Aussparung (33) definiert, die in der Richtung einer lateralen Seite des Antriebsriemens (3) offen ist, wobei das transversale Element (32) einen unteren Teil (34), der radial innerhalb der Aussparung (33) angeordnet ist, einen Verbindungsteil (35), der auf der gegenüberliegenden, d. h. geschlossenen Seite der Aussparung (33) angeordnet ist, und einen oberen Teil (36) aufweist, der radial außerhalb der Aussparung (33) angeordnet ist, wobei der untere Teil (34) auf jeder Seite davon, die jeweils einer lateralen Seite des Antriebsriemens (3) entspricht, mit einer Riemenscheibenkontaktoberfläche (50, 51) versehen ist, um einen Reibungskontakt mit den Riemenscheiben (1, 2) herzustellen, wobei sich die Riemenscheibenkontaktoberflächen (50, 51) in den oberen Teil (36) des transversalen Elements (32) erstrecken, **dadurch gekennzeichnet, dass** sich die Riemenscheibenkontaktoberfläche (50) auf einer lateralen Seite des transversalen Element (32), die den Verbindungsteil (35) davon aufweist, radial nach außen über die gegenüberliegende Kontaktoberfläche (51) hinaus erstreckt, die auf der gegenüberliegenden lateralen Seite des transversalen Elements (32) bereitgestellt ist, die die Öffnung der Aussparung (33) aufweist.

2. Transversales Element (32) nach Anspruch 1, **dadurch gekennzeichnet, dass** die Riemenscheibenkontaktoberflächen (50, 51) davon beide in zwei separaten Abschnitten bereitgestellt sind, wobei die Abschnitte voneinander entweder durch die Aussparung (33) oder durch den Verbindungsteil (35) des transversalen Elements (32) getrennt sind und wobei das transversale Element (32) zwischen diesen separaten Abschnitten der Riemenscheibenkontaktoberflächen (50, 51) mit den Riemenscheiben (1, 2) nicht in Reibungskontakt tritt.

3. Transversales Element (32) nach Anspruch 1 oder 2, **dadurch gekennzeichnet, dass** sich die Riemenscheibenkontaktoberfläche (50), die auf der Seite des Verbindungsteils (35) des transversalen Elements (32) bereitgestellt ist, radial nach außen über die gegenüberliegende Riemenscheibenkontaktoberfläche (51) hinaus erstreckt, die auf der Seite des transversalen Elements (32) bereitgestellt ist, die die Öffnung der Aussparung (33) aufweist, sich jedoch nicht radial nach außen über eine imaginäre gerade Linie (SL) hinaus erstreckt, die durch das radial äußere Ende (51(b)) der gegenüberliegenden Riemenscheibenkontaktoberfläche (51) gezogen und im Wesentlichen senkrecht zu der gegenüberliegenden Riemenscheibenkontaktoberfläche (51) ausgerichtet ist.

4. Transversales Element (32) nach Anspruch 1, 2 oder 3, **dadurch gekennzeichnet, dass** sich die Riemenscheibenkontaktoberfläche (50), die auf der Seite des Verbindungsteils (35) des transversalen Elements (32) bereitgestellt ist, in drei separaten Abschnitten (50(a), 50(b), 50(c)) bereitgestellt ist, die voneinander durch zwei versenkte oder eingerückte Teile (NCS1, NCS2) des transversalen Elements (32) getrennt sind, wobei die eingerückten Teile (NCS1, NCS2) in Bezug auf eine imaginäre Linie eingerückt sind, die die drei separaten Abschnitte (50(a), 50(b), 50(c)) verbindet, und wobei die eingerückten Teile (NCS1, NCS2) mit den Riemenscheiben (1, 2) nicht in Reibungskontakt treten.

5. Antriebsriemen (3) mit einem Endlosträger (31) und mit mehreren transversalen Elementen (32) nach einem der vorhergehenden Ansprüche, wobei der Endlosträger (31) in den Aussparungen (33) der transversalen Elemente (32) aufgenommen ist, sodass der untere Teil (34) der transversalen Elemente (32) auf der radialen Innenseite des Endlosträgers (31) angeordnet ist und die transversalen Elemente (32) zusammen eine im Wesentlichen kontinuierliche Reihe entlang des Umfangs des Endlosträgers (31) bilden.

6. Antriebsriemen (3) nach Anspruch 5, wobei die transversalen Elemente (32), insbesondere aufeinanderfolgende transversale Elemente (32) in dem Antriebsriemen (3) in einer gespiegelten Ausrichtung enthalten sind.

7. Stufenloses Getriebe mit dem Antriebsriemen (3) nach Anspruch 5 oder 6 und mit zwei Riemenscheiben (1, 2), die jeweils mit zwei, mindestens teilweise kegelförmigen Riemenscheibenrollen (4, 5) zum Einklemmen des Antriebsriemens (3) mindestens während des Betriebs des Getriebes versehen sind.

## Revendications

1. Elément transversal (32) pour une courroie d'entraînement (3) à utiliser dans une transmission à variation continue, par exemple pour des véhicules à moteur de transport de passagers, comprenant deux poulies (1, 2) entre lesquelles la courroie d'entraînement (3) est disposée, ledit élément transversal (32) définissant un renfoncement (33) qui est ouvert dans la direction d'un côté latéral de la courroie d'entraînement (3), ledit élément transversal (32) comprenant une partie inférieure (34) située radialement vers l'intérieur du renfoncement (33), une partie de connexion (35) située sur le côté opposé, c'est-à-dire le côté fermé du renfoncement (33), et une partie supérieure (36) située radialement vers l'extérieur du renfoncement (33), dans lequel la partie inférieure (34), sur les deux côtés de celle-ci, qui correspondent respectivement à un côté latéral de la courroie d'entraînement (3), présente une surface de contact de poulie (50; 51) pour effectuer un contact par frottement avec les poulies (1, 2), lesdites surface de contact de poulie (50, 51) s'étendant dans la partie supérieure (36) de l'élément transversal (32), **caractérisé en ce que** la surface de contact de poulie (50) sur un côté latéral de l'élément transversal (32) qui comprend la partie de connexion (35) de celui-ci, s'étend radialement vers l'extérieur au-delà de la surface de contact de poulie opposée (51) prévue sur le côté latéral opposé de l'élément transversal (32) qui comporte l'ouverture du renfoncement (33).

2. Elément transversal (32) selon la revendication 1, **caractérisé en ce que** les surfaces de contact de poulie (50, 51) de celui-ci sont toutes les deux prévues en deux sections séparées, lesdites sections étant mutuellement séparées soit par le renfoncement (33), soit par la partie de connexion (35) de l'élément transversal (32), et sections séparées des surfaces de contact de poulie (50, 51) entre lesquelles l'élément transversal (32) n'arrive pas en contact de frottement avec les poulies (1, 2).

3. Elément transversal (32) selon la revendication 1 ou 2, **caractérisé en ce que** la surface de contact de poulie (50) prévue sur le côté de la partie de connexion (35) de l'élément transversal (32) s'étend radialement vers l'extérieur au-delà de la surface de contact de poulie opposée (51) prévue sur le côté de l'élément transversal (32) qui comporte l'ouverture du renfoncement (33), mais ne s'étend pas radialement vers l'extérieur au-delà d'une ligne droite imaginaire (SL) tracée à travers l'extrémité radialement extérieure (51(b)) de ladite surface de contact de poulie opposée (51) et orientée essentiellement perpendiculairement à ladite surface de contact de poulie opposée (51).

4. Elément transversal (32) selon la revendication 1, 2 ou 3, **caractérisé en ce que** la surface de contact de poulie (50) prévue sur le côté de la partie de connexion (35) de l'élément transversal (32) est prévue en trois sections séparées (50(a), 50(b), 50(c)) qui sont mutuellement séparées par deux parties renfoncées ou indentées (NCS1, NCS2) de l'élément transversal (32), lesdites parties indentées (NCS1, NCS2) étant indentées par rapport à une ligne imaginaire qui relie lesdites trois sections séparées (50(a), 50(b), 50(c)), et lesdites parties indentées (NCS1, NCS2) n'arrivent pas en contact de frottement avec les poulies (1, 2).

5. Courroie d'entraînement (3) comprenant un support sans fin (31) et une pluralité d'éléments transversaux (32) selon l'une des revendications précédentes, dans laquelle le support sans fin (31) est logé dans les renfoncements (33) des éléments transversaux (32), de telle sorte que la partie inférieure (34) des éléments transversaux (32) soit située sur le côté intérieur radial du support sans fin (31) et qu'ensemble les éléments transversaux (32) forment une rangée essentiellement continue le long de la circonférence du support dans fin (31).

6. Courroie d'entraînement (3) selon la revendication 5, dans laquelle les éléments transversaux (32), en particulier des éléments transversaux consécutifs (32), sont inclus dans la courroie d'entraînement (3) dans une orientation mutuellement réfléchie.

7. Transmission à variation continue comprenant la courroie d'entraînement (3) selon la revendication 5 ou 6 et comprenant deux poulies (1, 2) chacune pourvue de deux flasques de poulie au moins partiellement coniques (4, 5) afin d'y coincer la courroie d'entraînement (3) au moins pendant le fonctionnement de la transmission.
